(19) Europäisches Patentamt
European Patent Office
Office européen des brevets

(11) **EP 1 013 373 B1**

(12) **EUROPÄISCHE PATENTSCHRIFT**

(45) Veröffentlichungstag und Bekanntmachung des Hinweises auf die Patenterteilung:
**06.04.2005 Patentblatt 2005/14**

(51) Int Cl.⁷: **B23Q 5/40**, B23Q 5/56

(21) Anmeldenummer: **99125297.4**

(22) Anmeldetag: **20.12.1999**

(54) **Antrieb für Maschinenaggregate, wie Schlitten, Greifeinrichtungen und dergleichen**

Drive for machine units, such as carriages, gripping devices and the like

Entraînement pour unités de machines, par exemple chariots, ensembles de serrage ou similaires

(84) Benannte Vertragsstaaten:
**AT BE CH CY DE DK ES FI FR GB GR IE IT LI LU MC NL PT SE**

(30) Priorität: **23.12.1998 DE 19859881**

(43) Veröffentlichungstag der Anmeldung:
**28.06.2000 Patentblatt 2000/26**

(60) Teilanmeldung:
**05000875.4**

(73) Patentinhaber: **Gebr. Heller Maschinenfabrik GmbH D-72622 Nürtingen (DE)**

(72) Erfinder: **Kurz, Artur 73240 Wendlingen (DE)**

(74) Vertreter: **Jackisch-Kohl, Anna-Katharina Patentanwälte Jackisch-Kohl & Kohl Stuttgarter Strasse 115 70469 Stuttgart (DE)**

(56) Entgegenhaltungen:
WO-A-94/13979  DE-A- 19 701 007
US-A- 4 557 156

• PATENT ABSTRACTS OF JAPAN vol. 007, no. 145 (M-224), 24. Juni 1983 (1983-06-24) & JP 58 057557 A (KIRIYUU KIKAI KK), 5. April 1983 (1983-04-05)

**Beschreibung**

Die Erfindung betrifft einen Antrieb für Maschinenaggregate, wie Schlitten, Greifeinrichtungen und dergleichen, nach dem Oberbegriff des Anspruches 1, wie z.B. aus der JP-A-58-057 557 bekannt.

Die Achsbewegungen von Werkzeugmaschinen sowie die einfachen oder zusammengesetzten Linear- und Drehbewegungen von Werkstücken und Werkzeugen müssen wegen der geforderten Genauigkeiten sehr exakt, möglichst ohne Verzögerung und mit hoher Wiederholgenauigkeit den Vorgabewerten aus der numerischen Steuerung folgen, und zwar unabhängig von einwirkenden Gegenkräften, wie Vorschubkraft, Reibung oder Trägheitsmomente bzw. Größe der zu verschiebenden linearen Massen. Die Verfahrgeschwindigkeit muß dabei möglichst hoch und die zum genauen Positionieren erforderliche Zeit möglichst gering sein.

Bei bekannten Antriebssystemen treibt ein Drehstrom-Synchronmotor am Maschinengestell eine dort drehbar gelagerte Kugelgewindespindel an. Sie ist in Eingriff mit einer Mutter, die in einem Schlitten oder Ständer drehfest gelagert ist. Schlitten und Ständer sind auf Führungen gegenüber dem Maschinengestell längsverschieblich. In Abhängigkeit von der Hublänge bzw. dem erforderlichen Eilgang des Schlittens liegen für die Spindel und die Mutter unterschiedliche Grenzdrehzahlen vor. Oberhalb bestimmter Schlankheitsgrade oder aus sonstigen konstruktiven Gründen der Kugelgewindespindel kann diese auch drehfest gehalten und die Gewindemutter rotatorisch angetrieben werden.

Die technischen Grenzen dieses bekannten Antriebssystems liegen in der Drehzahl- und Leistungsgrenze handelsüblicher Servomotoren. Insbesondere bei schwereren Maschinen gehen die Beschleunigung und die Abbremsung der bewegten Teile (Schlitten mit Werkstück, Spindel mit Kupplung oder Getriebe, Mutter) wesentlich in die Motordimensionierung ein. Da die Positionierzeiten, also die Beschleunigungs- und Verzögerungszeit, sowie die Fahrzeit von Position zu Position im Eilgang Nebenzeiten darstellen, besteht die Forderung nach hohen dynamischen Eigenschaften der Maschine. Hierunter wird das Verhalten bei Geschwindigkeitsänderungen verstanden, die der Vorschub- oder Positionierungsantrieb möglichst schnell, also mit hohen Beschleunigungswerten und ohne Überschwingen ausführen muß.

Der Erfindung liegt die Aufgabe zugrunde, den gattungsgemäßen Antrieb so auszubilden, daß für hohe Positioniergeschwindigkeiten bei Handlingeinrichtungen und Werkzeugmaschinen und eine Hochgeschwindigkeitszerspanung die Beschleunigung sowie die Eilgangund Vorschubgeschwindigkeiten hoch sind.

Diese Aufgabe wird beim gattungsgemäßen Antrieb erfindungsgemäß mit den Merkmalen des Anspruches 1 gelöst.

Weitere Merkmale der Erfindung ergeben sich aus den weiteren Ansprüchen, der Beschreibung und den Zeichnungen.

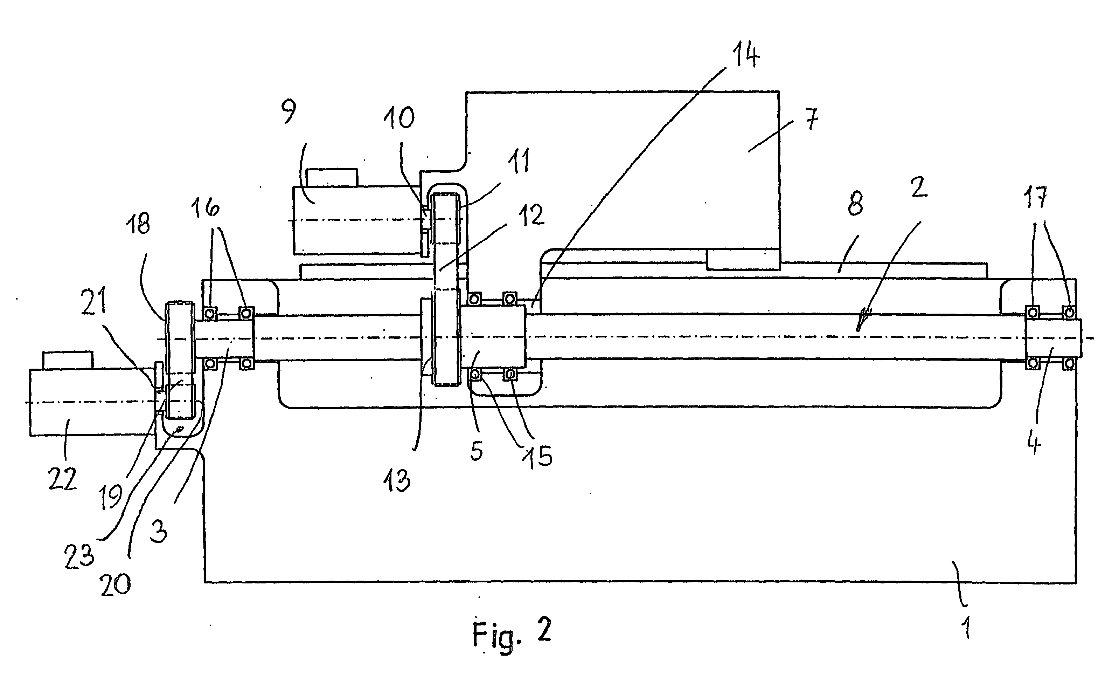

Die Erfindung wird anhand einiger in den Zeichnungen dargestellter Ausführungsbeispiele näher erläutert, wobei die Ausführungsbeispiele gemäß den Figuren 2 bis 9 nicht unter den Schutzumfang wie er durch die Ansprüche definiert wird fallen. Es zeigen

| | |
|---|---|
| Fig. 1a und 1b | in Seitenansicht und in schematischer Darstellung jeweils eine Maschine mit einem Vorschubantrieb nach dem Stand der Technik, |
| Fig. 2 | in einer Darstellung entsprechend Fig. 1 eine Maschine mit einem erfindungsgemäßen, als Vorschubantrieb ausgebildeten Antrieb, |
| Fig. 3 | in einer Darstellung entsprechend Fig. 2 eine zweite Ausführungsform eines erfindungsgemäßen, als Vorschubantrieb ausgebildeten Antriebes, der an einer Maschine vorgesehen ist, |
| Fig. 4 | in vergrößerter Darstellung und in Seitenansicht einen Teil eines erfindungsgemäßen, ebenfalls als Vorschubantrieb ausgebildeten Antriebes, |
| Fig. 5 | eine Ansicht in Richtung des Pfeiles V in Fig. 4, |
| Fig. 6 und 7 | in Darstellungen entsprechend den Fig. 4 und 5 einen Teil einer weiteren Ausführungsform eines erfindungsgemäßen Antriebes, |
| Fig. 8 und 9 | in Darstellungen entsprechend Fig. 2 weitere Ausführungsformen von erfindungsgemäßen Antrieben, |
| Fig. 10 | eine Vorderansicht eines erfindungsgemäßen Antriebes für eine Greifeinrichtung eines Werkzeugwechslers, |
| Fig. 11 | eine Seitenansicht des Antriebes gemäß Fig. 10, |
| Fig. 12 | in vergrößerter Darstellung und in Seitenansicht die Verbindung zwischen Antriebsmotoren und Gewindespindel sowie Mutter des Antriebes gemäß Fig. 10, |
| Fig. 13 | in einer Darstellung entsprechend Fig. 10 eine weitere Ausführungsform |

eines erfindungsgemäßen Antriebes für eine Greifeinrichtung eines Werkzeugwechslers,

Fig. 14         den Antrieb gemäß Fig. 13, bei dem die Greifer der Greifeinrichtung eine Zwischenstellung einnehmen,

Fig. 15         eine Seitenansicht eines weiteren erfindungsgemäßen Antriebes.

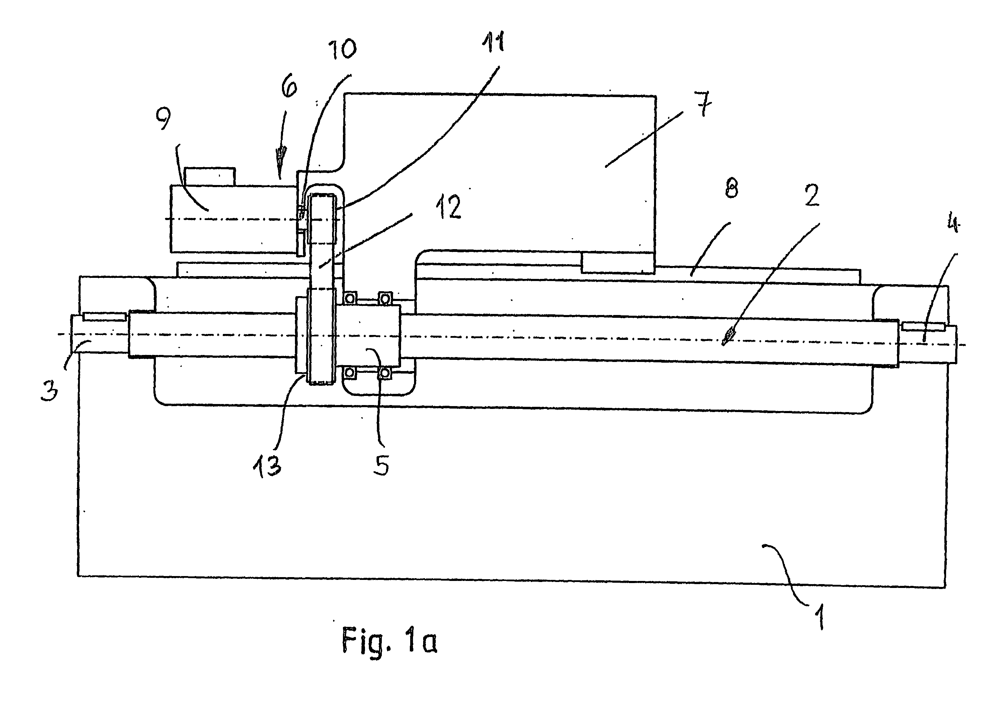

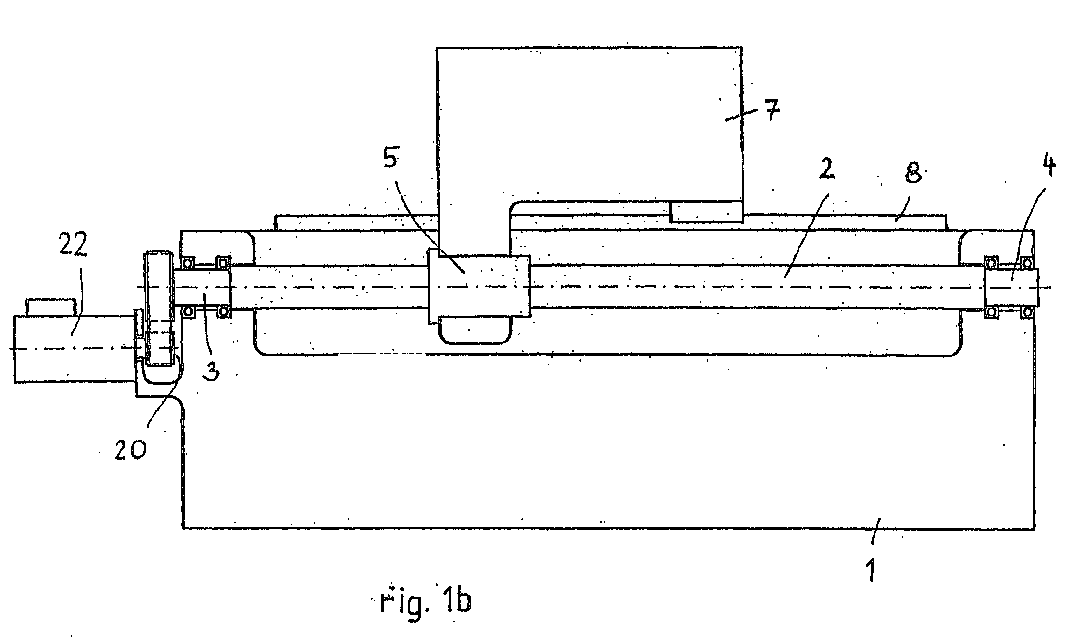

Die Fig. 1 bis 9 zeigen Antriebssysteme, die als Vorschubantriebe ausgebildet sind. Mit Vorschubantrieben werden beispielsweise an Werkzeugmaschinen Schlitten bewegt. Fig. 1a zeigt eine solche Maschine mit einem Maschinenbett 1, auf dem eine Spindel 2 drehfest gelagert ist. Die Spindel 2 ist mit ihren Enden 3, 4 drehfest im Maschinenbett gelagert. Auf der Spindel 2, die beispielsweise eine Kugelgewindespindel ist, sitzt eine Mutter 5, die mit einem Vorschubantrieb 6 drehbar angetrieben wird. Er ist an einem Schlitten 7 vorgesehen, der längs einer Führung 8 auf dem Maschinenbett 1 verfahrbar ist. Die Mutter 5 ist drehbar, aber axial unverschieblich im Schlitten 7 gelagert. Der Vorschubantrieb 6 hat einen Antriebsmotor 9 mit einer Antriebswelle 10, auf der drehfest eine Riemenscheibe 11 sitzt, über die ein endloser Antriebsriemen geführt ist. Auf der Mutter 5 sitzt ebenfalls eine Riemenscheibe 13 für den Antriebsriemen 12. Mit dem Antriebsmotor 9 wird die Antriebswelle 10 gedreht, die über den beschriebenen Riementrieb 11 bis 13 die Mutter 5 drehbar antreibt. Da sie in Eingriff mit der drehfesten Spindel 2 ist, wird die Mutter 5 längs der Spindel 2 verschoben, wodurch der Schlitten 7 in der entsprechenden Richtung längs der Führung 8 verschoben wird. Je nach Drehrichtung der Antriebswelle 10 wird der Schlitten 7 in der jeweiligen Richtung auf dem Maschinenbett 1 verfahren.

Als Antriebsmotor 9 wird ein Servomotor eingesetzt. Da der Schlitten 7 mit dem Antriebsmotor 9 erhebliches Gewicht hat, sind entsprechend starke Antriebsmotoren 9 erforderlich, um den Schlitten rasch zu beschleunigen bzw. abzubremsen.

Fig. 1b zeigt eine bekannte Maschine, bei der die Spindel 2 auf dem Maschinenbett 1 drehbar gelagert ist. Ihr eines Ende 3 ist über einen Riementrieb mit einem am Maschinenbett 1 befestigten Antriebsmotor 22 antriebsverbunden. Auf der Spindel 2 sitzt die Mutter 5, die im Schlitten 7 drehfest gelagert ist. Durch Drehen der Spindel 2 wird der Schlitten 7 über die Mutter 5 längs der Führung 8 verschoben. Mit einer solchen Maschine können keine hohen Beschleunigungen sowie Eilgang- und Vorschubgeschwindigkeiten erreicht werden.

Bei der Maschine gemäß Fig. 2 wird die auf der Gewindespindel 2 sitzende Mutter 5 in der beschriebenen Weise über den Riementrieb 11 bis 13 drehbar angetrieben. Der Antriebsmotor 9, der vorzugsweise ein Servomotor ist, wird vom Schlitten 7 getragen. Die Mutter 5 ist drehbar, aber axial unverschieblich im Schlitten 7 gelagert, der einen entsprechenden Aufnahmeraum 14 für die Mutter 5 und Lager 15 zur drehbaren Abstützung der Mutter aufweist. Die auf der Antriebswelle 10 drehfest sitzende Riemenscheibe 11 hat kleineren Durchmesser als die auf der Mutter 5 drehfest sitzende Riemenscheibe 13. Dadurch wird die Drehzahl der Antriebswelle 10 entsprechend dem Durchmesserverhältnis der beiden Riemenscheiben 11, 13 untersetzt. Der Schlitten 7 ist längs der Führung 8 auf dem Maschinenbett 1 verfahrbar. Die Spindel 2 ist mit ihren Enden 3, 4 über Lager 16, 17 im Maschinenbett 1 drehbar abgestützt.

Auf dem einen Ende der Spindel 2 sitzt drehfest eine Riemenscheibe 18, die über einen Antriebsriemen 19 mit einer Riemenscheibe 20 antriebsverbunden ist. Sie sitzt drehfest auf einer Antriebswelle 21 eines Antriebsmotors 22, der vorteilhaft ebenso wie der Antriebsmotor 9 ein Servomotor ist. Der Antriebsmotor 22 ist am Maschinenbett 1 befestigt. Die Riemenscheibe liegt in einer Vertiefung 23 des Maschinenbettes 1, in die die Antriebswelle 21 ragt. Da die Riemenscheibe 20 kleineren Durchmesser als die spindelseitige Riemenscheibe 18 hat, wird die Drehgeschwindigkeit der Antriebswelle 21 in die Drehgeschwindigkeit der Gewindespindel 2 untersetzt.

Die Mutter 5 und die Gewindespindel 2 werden entgegengesetzt zueinander drehbar angetrieben.

Bei dem beschriebenen Vorschubantrieb sind zwei Antriebsstränge vorgesehen, da der Antrieb des Schlittens 7 sowohl über die Mutter 5 als auch über die Gewindespindel 2 erfolgt. Die hierfür vorgesehenen beiden Antriebsmotoren 9, 22 liegen vorteilhaft in einem (nicht dargestellten) Regelkreis, um eine einwandfreie Abstimmung der Drehzahlen der Mutter 5 und der Gewindespindel 2 zu gewährleisten.

Durch die Aufteilung der Antriebsleistung wird das bei der Beschleunigung des Schlittens 7 zu überwindende Gesamtträgheitsmoment $J_m$ nach den Gleichungen

$$J_m = D^4 \times \text{const}$$

$$J_{mges} = J_{m1} + J_{m2}$$

kleiner.

Hierbei bedeuten:

$J_m$         Gesamtträgheitsmoment
D         Durchmesser
$J_{mges}$         Gesamtträgheitsmoment der Antriebsmotoren 9, 22
$J_{m1}$         Trägheitsmoment des Antriebsmotors 9
$J_{m2}$         Trägheitsmoment des Antriebsmotors 22

Die Geschwindigkeiten der beiden Antriebsmotoren 9, 22 addieren sich. Dadurch können bei gegebener maximaler Eilganggeschwindigkeit für den Schlitten 7 noch Getriebestufen zwischen dem jeweiligen Antriebsmotor und der Gewindespindel 2 bzw. der Mutter 5 geschaltet werden, die das für hohe Beschleunigungen erforderliche Drehmoment liefern. Andererseits kann bei direktem Eintrieb der Motoren 9, 22 ohne Getriebestufe die doppelte Eilganggeschwindigkeit erreicht werden, was insbesondere für Zwecke der Hochgeschwindigkeitszerspanung von Vorteil ist.

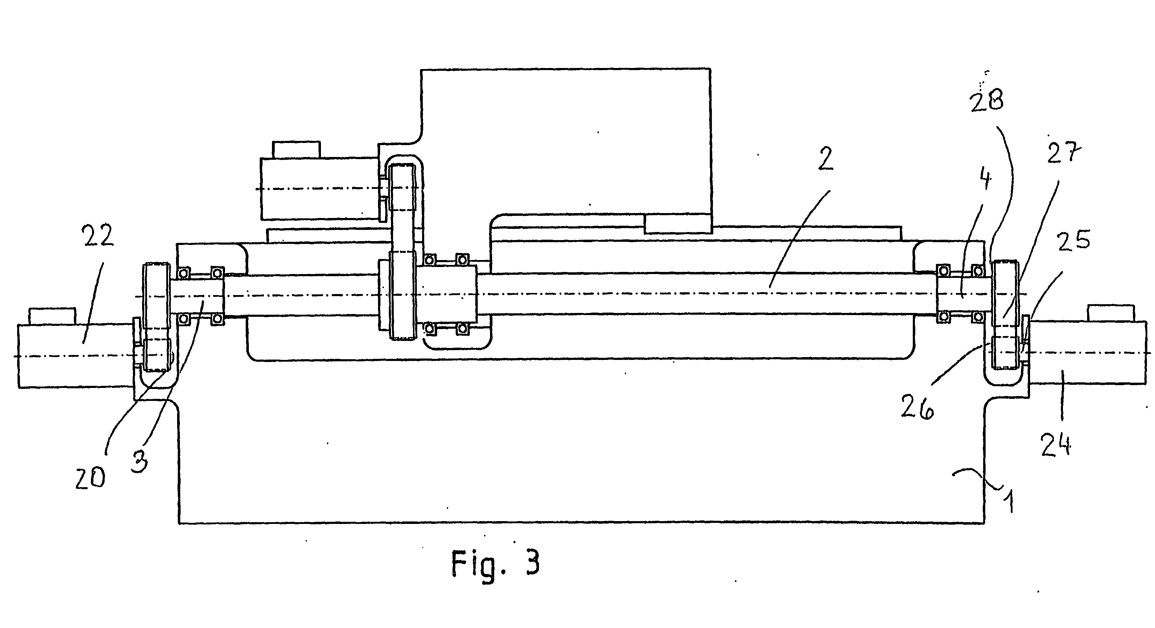

Die Ausführungsform nach Fig. 3 unterscheidet sich vom Ausführungsbeispiel nach Fig. 2 nur dadurch, daß die Spindel 2 an beiden Enden 3, 4 mit jeweils einem Antriebsmotor 22, 24 drehbar angetrieben wird. Der Antriebsmotor 24 ist am Maschinenbett 1 angeflanscht und hat eine Antriebswelle 25, auf der eine Riemenscheibe 26 sitzt, die über einen Antriebsriemen 27 mit einer auf der Spindel 2 drehfest sitzenden Riemenscheibe 28 antriebsverbunden ist. Die Riemenscheibe 26 hat wie die Riemenscheibe 20 halb so großen Durchmesser wie die Riemenscheibe 28. Die beiden Motoren 22, 24 werden synchron angetrieben und befinden sich vorteilhaft in einem Regelkreis, so daß die Drehzahlen der beiden Motoren 22, 24 genau aufeinander abgestimmt werden können. Da die Spindel 2 an beiden Enden angetrieben wird, benötigen die Antriebsmotoren 22, 24 kein hohes Drehmoment, so daß sie entsprechend kompakt ausgebildet sein können. Im übrigen ist die Ausführungsform nach Fig. 3 gleich ausgebildet wie das Ausführungsbeispiel gemäß Fig. 2.

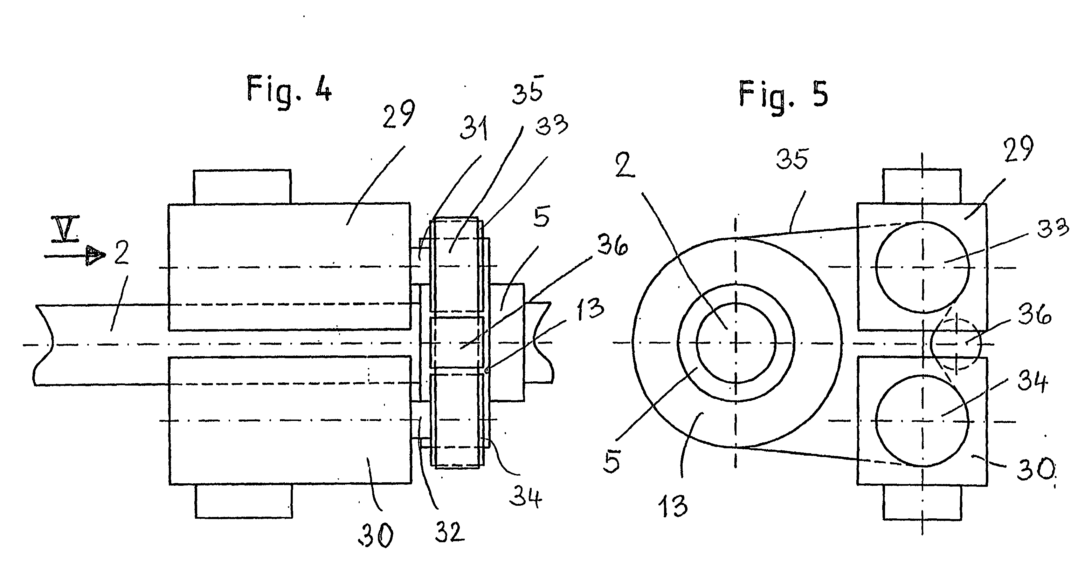

Die Fig. 4 und 5 zeigen die Möglichkeit, die auf der Gewindespindel 2 sitzende Mutter 5 mit zwei Antriebsmotoren 29, 30 drehbar anzutreiben, dafür die Gewindespindel 2 jedoch drehfest im Maschinenbett 1 zu lagern. Bei den vorigen Ausführungsbeispielen wird die Mutter 5 nur durch jeweils einen Antriebsmotor 9 drehbar angetrieben, dafür aber die Gewindespindel 2 ebenfalls drehbar anzutreiben.

Die beiden Antriebsmotoren 29, 30 liegen übereinander an einer Seite der Spindel 2 bzw. der Mutter 5. Die Antriebsmotoren 29, 30 haben zueinander parallele Antriebswellen 31, 32, auf denen jeweils eine Riemenscheibe 33, 34 drehfest sitzt. Sie haben vorteilhaft gleichen Durchmesser und sind über einen endlos umlaufenden Antriebsriemen 35 miteinander antriebsverbunden. Auf der Mutter 5 sitzt die Riemenscheibe 13, die vom Antriebsriemen 35 umschlungen wird. Auf der von der Riemenscheibe 13 abgewandten Seite befindet sich im Bereich zwischen den Riemenscheiben 33, 34 eine Spannrolle 36, mit der die notwendige Spannung des Antriebsriemens 35 eingestellt werden kann. Die Spannrolle 36 ist vorteilhaft quer zur Achse der Spindel 2 bzw. der Mutter 5 verstellbar. Die Antriebsmotoren 29, 30 und die Spannrolle 36 sind am Schlitten 7 (Fig. 2 und 3) gelagert. Die Riemenscheiben 33, 34 liegen in einer gemeinsamen Radialebene der Spindel 2 bzw. der Mutter 5.

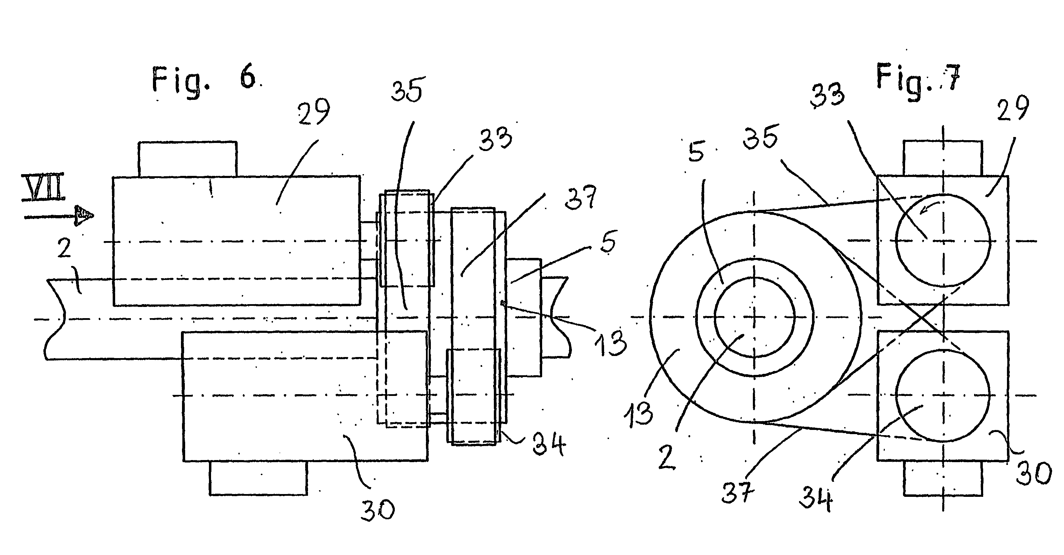

Die Fig. 6 und 7 zeigen eine Ausführungsform, bei welcher die Riemenscheiben 33, 34 der Antriebsmotoren 29, 30 axial versetzt zueinander liegen. Dadurch sind zwei Antriebsriemen 35 und 37 notwendig, um die Mutter 5 drehbar anzutreiben. Die Antriebsriemen 35, 37 liegen mit geringem axialen Abstand nebeneinander. Dementsprechend ist die Mutter 5 breiter als bei den vorigen Ausführungsbeispielen, bei denen zum Antrieb der Mutter 5 nur ein einziger Antriebsriemen 12, 35 vorgesehen ist. In Achsrichtung der beiden Antriebsmotoren 29, 30 gesehen kreuzen die Trums der beiden Antriebsriemen 35, 37 einander.

Die beiden Antriebsmotoren 29, 30 sind vorteilhaft gleicher Bauart und haben die gleiche Kennlinie. Es ist selbstverständlich möglich, auch Antriebsmotoren 29, 30 unterschiedlicher Bauart und/oder unterschiedlicher Kennlinie zu verwenden. In diesem Fall wird vorteilhaft über eine Regelung sichergestellt, daß die beiden Antriebsmotoren 29, 30 in ihrer Drehzahl aufeinander abgestimmt sind, um die Mutter 5 zuverlässig drehbar anzutreiben.

Da bei den Ausführungsformen nach den Fig. 4 bis 7 nur die Mutter 5 mit zwei Antriebsmotoren 29, 30 drehbar angetrieben wird, lassen sich sehr hohe Positioniergeschwindigkeiten und Beschleunigungen erreichen.

Bei den Ausführungsformen nach den Fig. 2 und 3 werden die Mutter 5 mit dem einen Antriebsmotor 9 und die Spindel 2 mit einem (Fig. 2) oder mit zwei Antriebsmotoren 22, 24 (Fig. 3) drehbar angetrieben. Dadurch kann das zur Verfügung stehende gesamte Drehmoment und damit die Beschleunigung gesteigert bzw. die Eilganggeschwindigkeit des Schlittens 7 gesteigert werden. Auch in diesem Falle werden sehr hohe Positioniergeschwindigkeiten erreicht. Die Antriebsmotoren 9, 22, 24 zum Antrieb der Mutter 5 und der Spindel 2 sind miteinander synchronisiert und haben somit gleiche Drehzahl. Bei der Berücksichtigung des Gesamtträgheitsmomentes trägt das Massenträgheitsmoment der Mutter 5 und des Schlittens 7 nur zur Hälfte bei. Das dadurch frei gewordene Motormoment erlaubt es, eine entsprechend hohe Axialkraft auf den Schlitten 7 auszuüben bzw. eine höhere Beschleunigung zu erzielen. Werden die Mutter 5 und die Spindel 2 getrennt voneinander drehbar angetrieben, können die Riemenscheiben auf den Antriebswellen 10, 21, 25 der Antriebsmotoren 9, 22, 24 klein sein, so daß sich nur entsprechend kleine Massenträgheitsmomente ergeben. Dadurch sind Beschleunigungssteigerungen im Vergleich zu den herkömmlichen Vorschubantrieben von etwa 20 bis 30 % möglich.

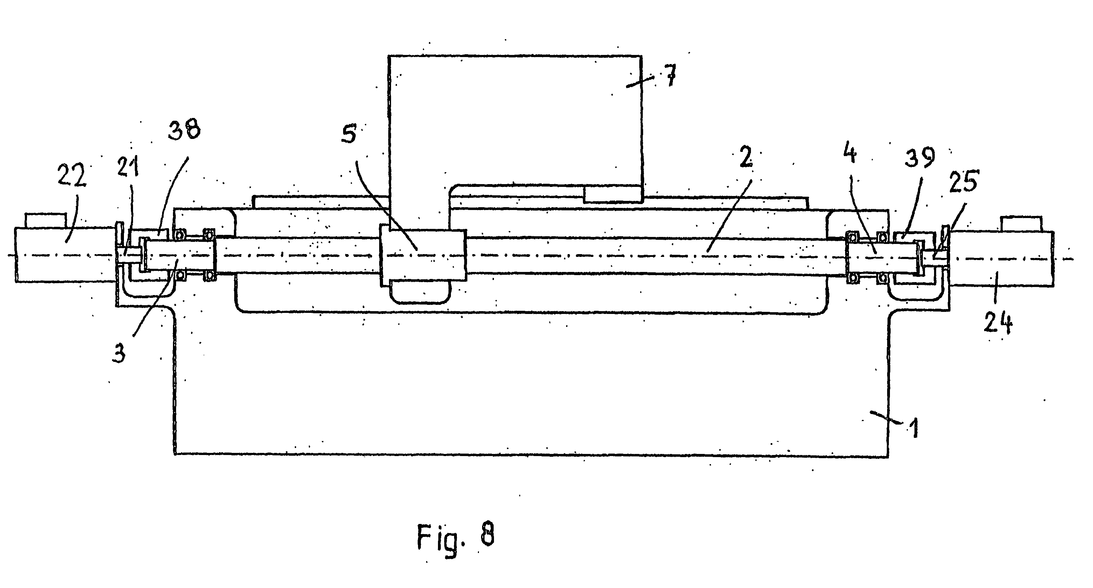

Fig. 8 zeigt eine Ausführungsform, bei der die Mutter 5 drehfest im Schlitten 7 gelagert ist. Dafür wird die Spindel 2 an ihren beiden Enden 3 und 4 mit den Antriebsmotoren 22, 24 drehbar angetrieben. Im Unterschied zu den vorigen Ausführungsformen erfolgt der Antrieb der Spindel 2 ohne Übersetzung, sondern direkt. Die beiden Antriebswellen 21, 25 der Antriebsmotoren 22, 24 sind über jeweils ein Kupplungsstück 38, 39 drehfest mit den Spindelenden 3, 4 verbunden. Die beiden Antriebsmotoren 22, 24 sind vorteilhaft gleicher Bauart und haben gleiche Kennlinie. Selbstverständlich ist es möglich, Antriebsmotoren 22, 24 unterschiedlicher Bauart und/oder unterschiedlicher Kennlinie zu verwenden. Über eine Regelung wird gewährleistet, daß die beiden Antriebsmotoren 22, 24 in ihrer Drehzahl so aufeinander abgestimmt sind, daß die Spindel 2 zuverlässig drehbar angetrieben wird. Da die Spindel 2 an beiden Enden drehbar angetrieben wird, werden sehr hohe Positioniergeschwindigkeiten erreicht, da die Beschleunigung sowie die Eilganggeschwindigkeit des Schlittens 7 gesteigert werden können.

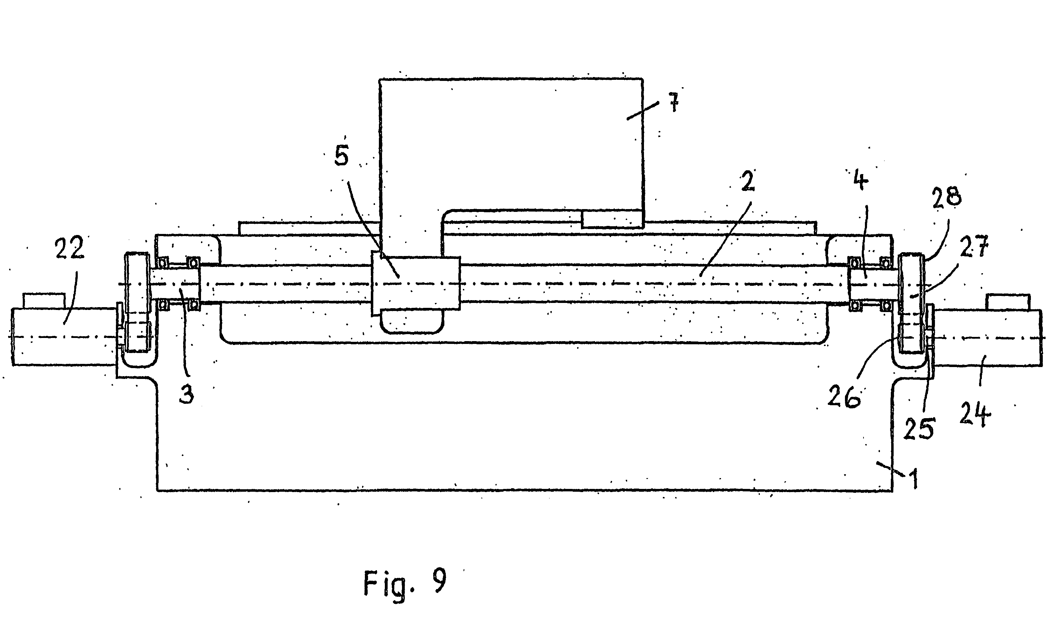

Das Ausführungsbeispiel gemäß Fig. 9 unterscheidet sich von der Ausführungsform gemäß Fig. 3 lediglich dadurch, daß die Mutter 5 nicht drehbar angetrieben ist und drehfest im Schlitten 7 sitzt. In diesem Falle wird die Spindel über die beiden Antriebsmotoren 22, 24 über eine Riemenübersetzung drehbar angetrieben. Auch bei einer solchen Ausführung werden sehr hohe Beschleunigungen und dementsprechend hohe Positioniergeschwindigkeiten erreicht.

Die resultierende Vorschubgeschwindigkeit des Schlittens 7 kann bei den beschriebenen Ausführungsbeispielen durch Wahl der Parameter Drehrichtung und Drehgeschwindigkeit in additivem oder subtraktivem Sinne gesteuert werden. Werden die Gewindespindel 2 und die Mutter 5 in Drehrichtung entgegengesetzt zueinander mit gleicher Drehzahl angetrieben, bleibt der Schlitten 7 stehen. Werden hingegen die Gewindespindel 2 und die Mutter 5 mit unterschiedlichen Drehzahlen drehbar angetrieben, bewegt sich der Schlitten 7 auf dem Maschinenbett 1. Je nach Unterschied der Drehzahlen wird eine entsprechende Vorschubgeschwindigkeit des Schlittens 7 erreicht.

Die Schlittenbewegung aus dem Stillstand kann dadurch eingeleitet werden, daß die Gewindespindel 2 und die Mutter 5 zunächst gleichsinnig rotierend auf die optimale Drehzahl gebracht werden. Anschließend wird einer der Antriebsmotoren mit hoher Verzögerung zum Stillstand gebracht und dann gegebenenfalls wieder in Gegenrichtung beschleunigt. Auf diese Weise kann das Schwungmoment zum Antrieb des Schlittens 7 ausgenutzt werden.

Bei einer anderen (nicht dargestellten) Ausführungsform werden zwei Gewindetriebe, die jeweils aus einer Gewindespindel und einer Mutter bestehen, hintereinander geschaltet. Die beiden Muttern sind mit jeweils einem Schlitten verbunden. Beide Schlitten haben eine gemeinsame Führung.

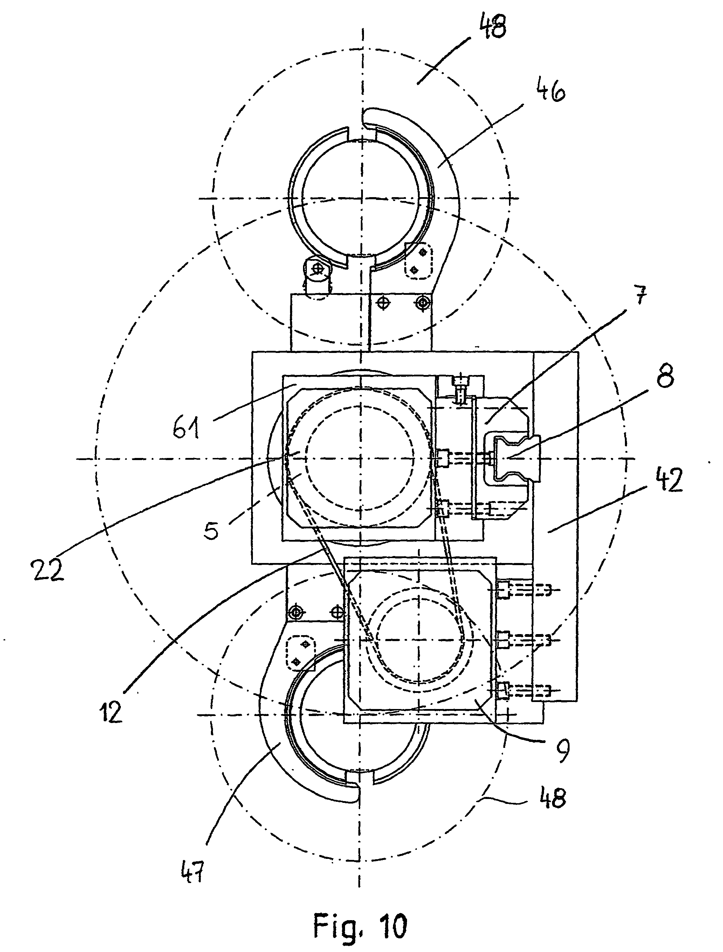

Die Fig. 10 bis 15 zeigen einen Antrieb, mit dem ein rascher Werkzeugwechsel vorgenommen werden kann. Der Antrieb hat eine Gewindespindel 40, die vorteilhaft eine Kugelgewindespindel ist. Auf ihr sitzt die Mutter 5, die in einem Gehäuse 41 drehbar gelagert ist. Es ist mit einem Träger 42 fest verbunden, der die horizontale Führungsschiene 8 (Fig. 10) für den Schlitten 7 aufnimmt.

Die Gewindespindel 40 ist an einem Ende über eine Kupplung 43 mit der Antriebswelle 21 des Antriebsmotors 22 drehfest verbunden. Der Antriebsmotor 22 ist, wie Fig. 10 zeigt, auf dem Schlitten 7 befestigt. Am anderen Ende ist die Gewindespindel 40 mit einer fluchtend zu ihr liegenden Welle 44 über eine Kupplung 45 drehfest verbunden. Die Welle 44 ist in einem maschinenfesten Stützlager 60 drehbar und axial verschiebbar abgestützt. Auf der Welle 44 sitzen drehfest zwei Greifer 46 und 47 einer Greifereinrichtung 56, mit der Werkzeuge 48 ein- und ausgewechselt werden können. Die Greifer 46, 47 sind gleich ausgebildet und, wie Fig. 10 zeigt, um 180° verdreht zueinander angeordnet. Da die Arbeitsweise solcher Greifer bekannt ist, wird sie nicht näher erläutert. Die Greifer 46, 47 greifen in Greifernuten 49 der Werkzeuge 48 ein. Fig. 10 zeigt die beiden Greifer 46, 47 in der Greifstellung, in der sie das in einer Maschinenspindel 50 befindliche Werkzeug 48 und das in einem Magazinplatz 51 befindliche Werkzeug 48 greifen. Beide Werkzeuge 48 haben einen Kegel 52, mit dem sie in die Maschinenspindel 50 bzw. in eine entsprechende Aufnahme 53 im Magazinplatz 51 eingreifen. Um die Werkzeuge 48 auszuwechseln, müssen sie zunächst axial verschoben werden, damit ihre Kegel 52 von der Maschinenspindel 50 bzw. von der Aufnahme 53 des Magazinplatzes 51 frei kommen. Anschließend wird die Welle 44 in noch zu beschreibender Weise um ihre Achse um 180° gedreht, so daß das der Maschinenspindel 50 entnommene Werkzeug 48 dem Magazinplatz 51 und das dem Magazinplatz 51 entnommene Werkzeug 48 der Maschinenspindel 50 gegenüberliegt. Anschließend werden durch axiales Zurückfahren der Welle 44 die Werkzeuge 48 in die Maschinenspindel 50 bzw. in den Magazinplatz 51 eingesetzt.

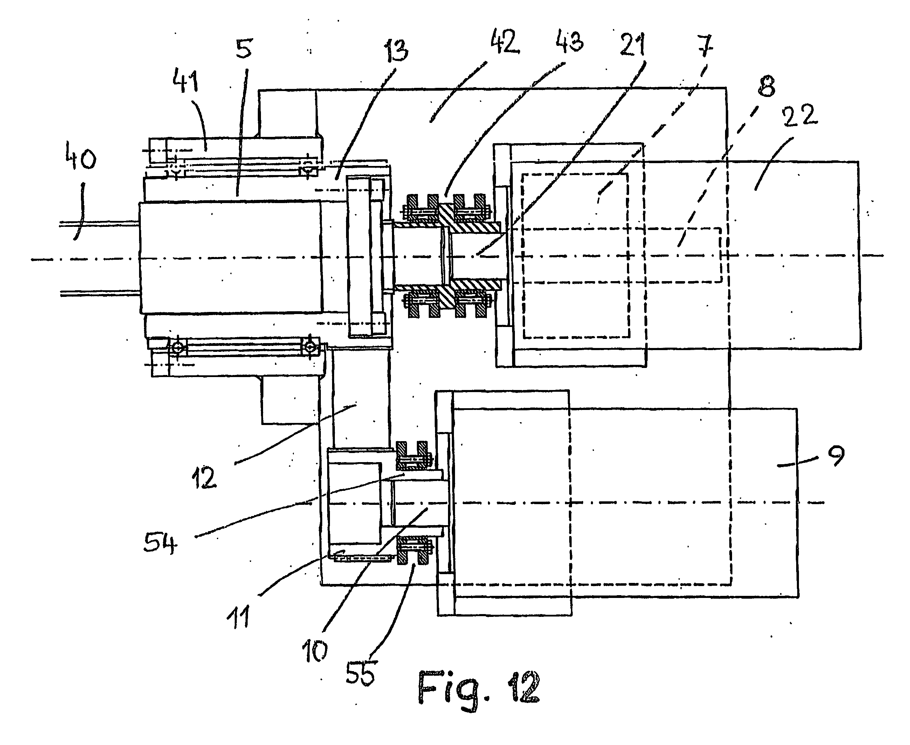

Die Mutter 5 steht in Richtung auf den Antriebsmotor 22 über das Gehäuse 41 vor. Dieses vorstehende Ende ist wiederum als Riemenscheibe 13 ausgebildet, die über den Antriebsriemen 12 mit der Riemenscheibe 11 auf der Antriebswelle 10 des Antriebsmotors 9 verbunden ist. Der Antriebsmotor 9 liegt parallel zum Antriebsmotor 22 und ist am Träger 42 befestigt. Die beiden Antriebsmotoren 9, 22 liegen, in Achsrichtung der Welle 44 gesehen, übereinander. Wie Fig. 12 zeigt, ist die Riemenscheibe 13 mittels einer Buchse 54, die vorteilhaft einstückig mit der Riemenscheibe ausgebildet ist, auf der Antriebswelle 10 mittels einer Klemmeinrichtung 55 aufgeklemmt.

Um einen Werkzeugwechsel durchzuführen, wird zunächst die Mutter 5 mittels des Antriebsmotors 9 und des Riementriebes 11 bis 13 in der erforderlichen Richtung angetrieben. Die Gewindespindel 40 wird dadurch axial verschoben, jedoch nicht um ihre Achse gedreht. Bei dieser Verschiebebewegung wird der Antriebsmotor 22 über den Schlitten 7 längs der Führung 8 verschoben. Da die Gewindespindel 40 drehfest und axial fest mit der Welle 44 verbunden ist, wird somit auch die die beiden Greifer 46, 47 aufweisende Greifeinrichtung 56 axial verschoben. Hierbei nehmen die Greifer 46, 47 die Werkzeuge 48 in der beschriebenen Weise so weit mit, bis die Kegel 52 aus der Maschinenspindel 50 bzw. aus dem Magazinplatz 51 frei kommen. Dann wird der Antriebsmotor 22 eingeschaltet und die Gewindespindel 40 im erforderlichen Drehsinn angetrieben. Dadurch wird auch die Welle 44 mit der Greifeinrichtung 56 gedreht. Gleichzeitig wird die Mutter 5 im Gleichsinn zur Gewindespindel 40 durch den Antriebsmotor 9 angetrieben. Der Antrieb der Mutter 5 und der Gewindespindel 40 ist, wie dies beispielhaft anhand von Fig. 2 beschrieben worden ist, so aufeinander abgestimmt, daß die Gewindespindel 40 lediglich um ihre Achse gedreht, nicht jedoch axial verschoben wird. Dies führt dazu, daß die Greifeinrichtung 56 um die Achse der Welle 44 gedreht wird, wodurch die Werkzeuge 48 ihre Plätze tauschen. Anschließend wird der Antriebsmotor 22 abgeschaltet und der Antriebsmotor 9 umgeschaltet, so daß die Mutter 5 im umgekehrten Drehsinn angetrieben wird. Da die Gewindespindel 40 still steht, werden die Werkzeuge 48 in die Maschinenspindel 50 bzw. in den Magazinplatz 51 eingesetzt.

Da die Werkzeuge 48 mit den Kegeln 52 versehen sind, ist es möglich, die Axialbewegung und die Drehbewegung in Kombination anzuwenden, so daß das Werkzeug 48 bereits beim Herausfahren des Kegels 52 aus der Maschinenspindel 50 bzw. aus dem Magazinplatz 51 geschwenkt wird. Sobald der Kegel 52 der Werkzeuge 48 geringfügig axial herausgezogen worden ist, hat er Abstand von der Wandung der Konusaufnahme der Maschinenspindel 50 bzw. des Magazinplatzes 51. Darum kann das Werkzeug 48 entsprechend dem Kegelwinkel beim Herausfahren bereits gedreht werden. Die Steuerung muß lediglich so abgestimmt sein, daß der Kegel 52 während dieser Schwenkbewegung nicht die Wandung der Aufnahmen in der Maschinenspindel 50 und im Magazinplatz 51 berührt. Bei dieser Verfahrensweise wird zunächst der Antriebsmotor 9 eingeschaltet, so daß die axial unbewegliche Mutter 5 im erforderlichen Sinne gedreht wird. Dadurch werden die Gewindespindel 40 und die Welle 44 axial verschoben und dadurch das jeweilige Werkzeug 48 aus der Maschinenspindel 50 sowie aus dem Magazinplatz 51 herausgezogen. Sobald der Kegel 52 von der Wandung der Aufnahmen in der Maschinenspindel bzw. im Magazinplatz frei kommt, wird der Antriebsmotor 22 eingeschaltet, um die Gewindespindel 40 und die Welle 44 während ihrer Axialbewegung auch in Abhängigkeit vom Kegelwinkel zu drehen. Dementsprechend sind die beiden Antriebsmotoren 9 und 22 über eine Steuerung miteinander gekoppelt, so daß in dem Maße, in dem der Kegel 52 aus der Maschinenspindel 50 sowie aus der Aufnahme 53 des Magazinplatzes 51 herausgezogen wird, auch geschwenkt wird. Sobald die Kegel 52 frei sind, werden die Antriebsmotoren 9, 22 über die Steuerung so angetrieben, daß die Gewindespindel 40 nur gedreht, nicht jedoch axial verschoben wird. Hierzu wird die Mutter 5 in der beschriebenen Weise im Gegensinn zur Gewindespindel 40 drehbar angetrieben. Die Greifeinrichtung 56 wird dann, wie zuvor beschrieben worden ist, um die Achse der Welle 44 gedreht, so daß die von den Greifern 46, 47 erfaßten Werkzeuge 48 ihre Plätze tauschen. Dann werden die Antriebsmotoren 9 und 22 umgeschaltet, so daß die Werkzeuge 48 wieder in Richtung auf die Maschinenspindel 50 und den freien Magazinplatz 51 axial verschoben werden. Hierbei werden die Antriebsmotoren 9, 22 über die Steuerung so aufeinander abgestimmt, daß während dieser Axialbewegung auch eine Drehbewegung der Gewindespindel 40 und der Welle 44 erfolgt. Der Linearbewegung wird somit die Drehbewegung in Abhängigkeit vom Kegelwinkel der Kegel 52 der Werkzeuge 58 überlagert. Kurz vor Erreichen der Endlage der Kegel 52 wird der Antriebsmotor 22 abgeschaltet, so daß nur noch die Mutter 5 über den Motor 9 angetrieben wird. Dann werden die Gewindespindel 40 und die Welle 44 nur noch axial verschoben, bis der Kegel 52 der Werkzeuge 48 in seine Endlage gelangt, in der er an der Wandung der Aufnahmen der Maschinenspindel 50 und des Magazinplatzes 51 anliegt. Durch die überlagerte Linear- und Drehbewegung der Gewindespindel 40 und der Welle 44 wird ein rascher Werkzeugwechsel erreicht.

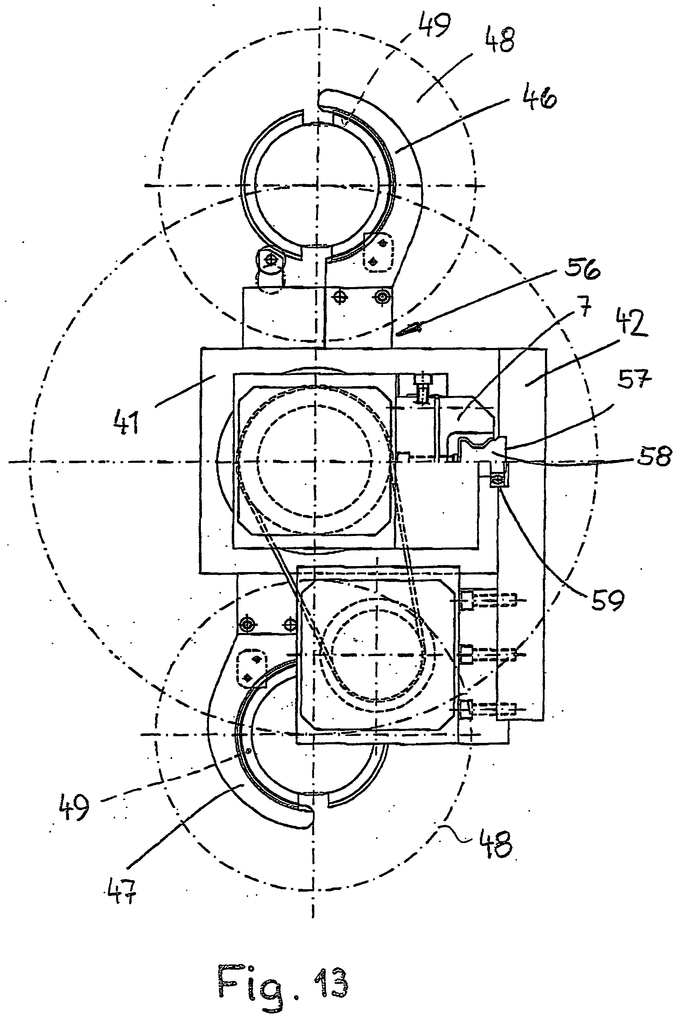

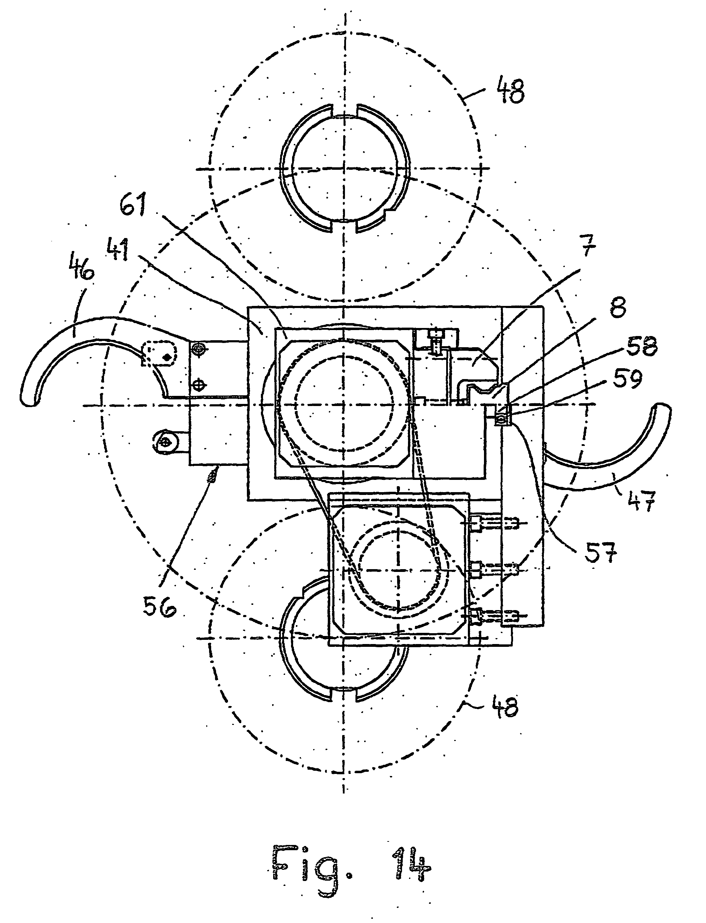

Der beschriebene Bewegungsablauf kann auch, wie Fig. 14 zeigt, durch Anfahren einer Zwischen-, Warte- oder Parkstellung der Greifer 46, 47 der Greifeinrichtung 56 ergänzt werden. Gemäß Fig. 13 befinden sich die beiden Greifer 46, 47 in Greifstellung, in der sie in die Greifernuten 49 der Werkzeuge 48 eingreifen. Aus dieser Greifstellung können die Greifer 46, 47 in der anhand der Fig. 10 bis 12 beschriebenen Weise axial verschoben und geschwenkt werden, um die Werkzeuge in die Maschinenspindel 50 sowie in den Magazinplatz 51 einzuwechseln. Nach dem Einwechseln der beiden Werkzeuge 48 wird die Greifeinrichtung 56 leer um 90° in die in Fig. 14 dargestellte Zwischen-, Warte- oder Parkstellung geschwenkt. In dieser Zwischenstellung geben die beiden Greifer 46, 47 die Maschinenspindel 50 sowie den Magazinplatz 51 frei. Bei Bedarf werden die Greifer 46, 47 wieder um 90° in der beschriebenen Weise in die Werkzeugübernahmepositionen geschwenkt.

Fig. 13 und 14 zeigen zwei unterschiedliche Varianten zur Führung des auf einem Trägerwinkel 61 montierten Motors 22. Während oberhalb der Symmetrielinie die aus Fig. 10 bekannte Lösung dargestellt ist, wird unterhalb eine in Achsrichtung verschiebbare Drehmomentabstützung des Trägerwinkels 61 gezeigt. Die koaxiale Führung von Trägerwinkel 61 und Motor 22, die über eine in diesem Falle feste Kupplung 43 mit der Spindel 40 eine Einheit bilden, erfolgt durch das Lagergehäuse 41 und das Stützlager 60. Die Drehmomentabstützung wird durch eine in Verschieberichtung der Gewindespindel 40 sich erstreckende Vertiefung 57 verwirklicht, in die eine am Schlitten 7 drehbar gelagerte Stützrolle 58 eingreift. Beim Verschieben des Antriebsmotors 22 rollt die Stützrolle 58 über das Lager 59 ab, so daß der Antriebsmotor 22 leichtgängig in der gewünschten Richtung verschoben werden kann, um die Gewindespindel 40 axial zu verschieben, wie anhand der Fig. 10 bis 12 im einzelnen erläutert worden ist. Im übrigen ist der Antrieb gemäß den Fig. 13 und 14 gleich ausgebildet wie die Ausführungsform nach den Fig. 10 bis 12.

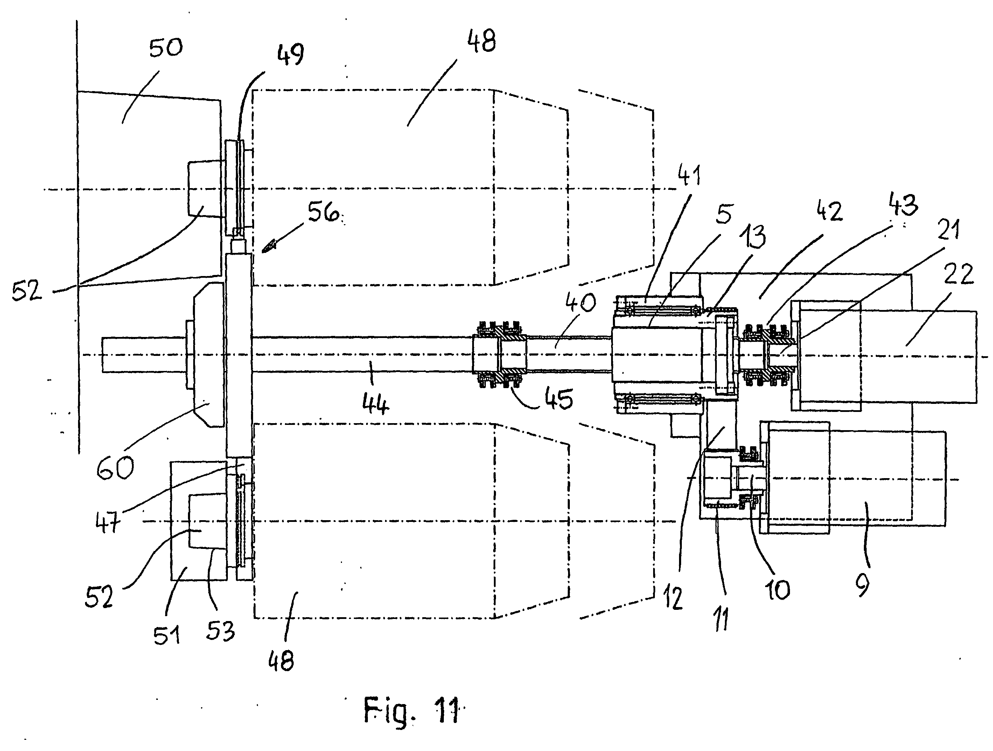

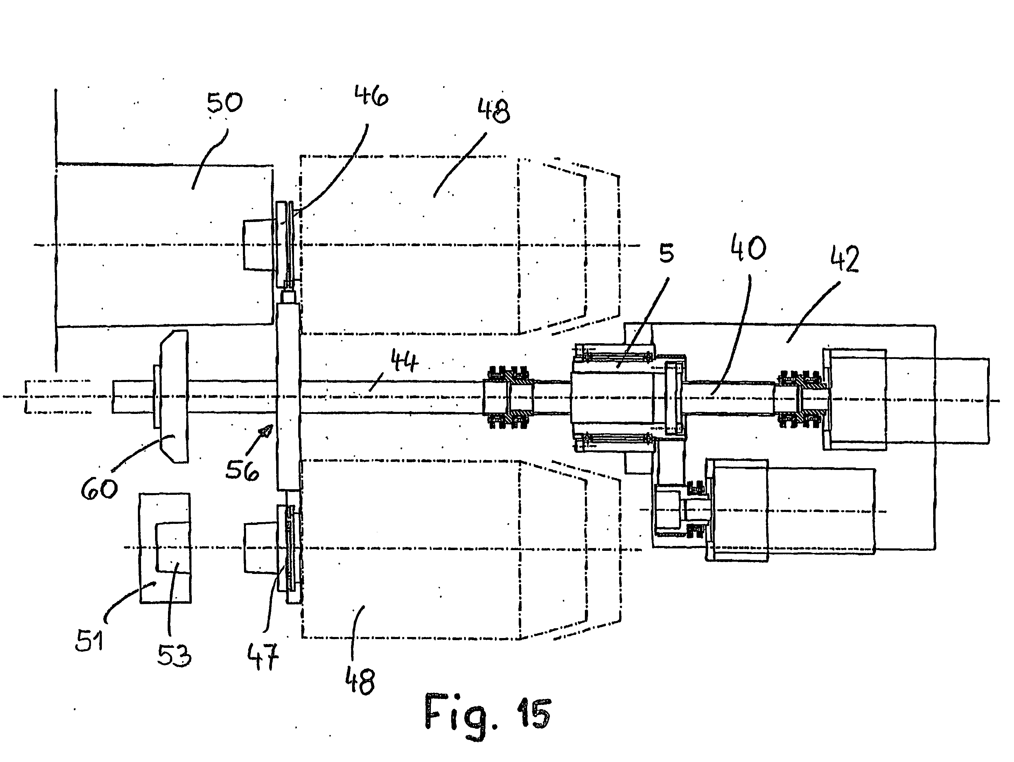

Bei der Ausführungsform nach den Fig. 10 bis 12 liegen die Aufnahme der Maschinenspindel 50 und die Aufnahme 53 im Magazinplatz 51 in einer gemeinsamen Ebene (Fig. 11). Dadurch können die beiden Greifer 46, 47 der Greifeinrichtung 56 die Werkzeuge 48 in der Maschinenspindel 50 und im Magazinplatz 51 gleichzeitig auswechseln. Fig. 15 zeigt eine Ausführungsform, bei der die Aufnahme 53 des Magazinplatzes 51 in bezug auf die Aufnahme der Maschinenspindel 50 axial zurückgesetzt ist. Wenn darum mit dem einen Greifer 46 das Werkzeug 48 in die Maschinenspindel 50 eingesetzt wird, liegt das durch den anderen Greifer 47 erfaßte Werkzeug 48 noch mit axialem Abstand zum Magazinplatz 51 (Fig. 15). Der Antrieb gemäß Fig. 15 ist für einen Werkzeugwechsel in unterschiedlichen, vorzugsweise zur Achse, der Gewindespindel 40 senkrechten Übergabeebenen sowohl hinsichtlich Spindelebene als auch Magazinplatzebene geeignet. Dies wird einerseits beim Bestücken mit Arbeitsspindeln 50 unterschiedlicher Spindelhalslänge und/oder von in die Maschine einwechselbaren Spindelköpfen erforderlich. Andererseits kann auch magazinseitig, zum Beispiel durch unterschiedliche Magazinpositionen und/oder unterschiedlich lange Werkzeuge, die Übergabeposition wechseln.

Bei einer solchen Ausbildung wird die Greifeinrichtung 56, nachdem beispielsweise das eine Werkzeug 48 in die Maschinenspindel 50 eingewechselt worden ist (Fig. 15), durch Antrieb der Mutter 5 und der Gewindespindel 40 um die Achse der Gewindespindel 40 so weit gedreht, bis der Greifer 47 mit seinem Werkzeug 48 der Aufnahme 53 des Magazinplatzes 51 gegenüberliegt. Dann wird, wie anhand der Fig. 10 bis 12 beschrieben worden ist, das Werkzeug 48 durch Axialverschieben der Gewindespindel 40 in die Aufnahme 53 des Magazinplatzes 51 eingesetzt.

Die beiden Greifer 46, 47 der Greifeinrichtung 56 sind selbstverständlich so angeordnet, daß sie beim Axialverfahren zum Einwechseln des Werkzeuges in den Magazinplatz 51 nicht mit Maschinenkomponenten kollidieren.

Da die Gewindespindel 40 und damit auch die mit ihr gekoppelte Welle 44 bei der Ausführungsform nach Fig. 15 einen größeren axialen Verschiebeweg ausführt, ist das Stützlager 60 für die Welle 44 in einem größeren Abstand zum Träger 42 angeordnet als bei der Ausführungsform nach den Fig. 10 bis 12.

Der Antrieb gemäß den Fig. 10 bis 15 ist vorteilhaft für den Einsatz bei einer Greifeinrichtung beschrieben worden. Ein solcher Antrieb kann darüber hinaus auch dort eingesetzt werden, wo lineare Bewegungen und Dreh- bzw. Schwenkbewegungen sowohl simultan als auch sequentiell ausgeführt werden müssen, zum Beispiel Palettenwechsler an Werkzeugmaschinen. Solche Bewegungen sind für Gegenstände notwendig, die für eine Fertigung, eine Lagerung, ein Handling und dergleichen bewegt bzw. transportiert werden müssen.

**Patentansprüche**

1.　Antrieb für Maschinenaggregate, wie Schlitten, Greifeinrichtungen und dergleichen, mit mindestens einer durch einen Antriebsmotor (22) antreibbaren Gewindespindel (40), auf der mindestens eine Mutter (5) sitzt, die mittels eines weiteren Antriebsmotors (9) drehbar antreibbar ist, **dadurch gekennzeichnet, daß** die Antriebsmotoren (9,22) über eine Steuerung so aufeinander abgestimmt werden, daß die Maschinenaggregatbewegung aus dem Stillstand dadurch eingeleitet wird, daß zunächst die Mutter (5) zum axialen Verschieben der Gewindespindel (40) drehbar angetrieben wird, daß anschließend auch die Gewindespindel (40) in gleichem Drehsinn angetrieben wird, und daß danach die Mutter (5) und die Gewindespindel (40) zueinander so gedreht werden, daß die Gewindespindel (40) axial fest steht und lediglich um ihre Achse dreht.

2.　Antrieb nach Anspruch 1, **dadurch gekennzeichnet, daß** die Mutter (5) und die Gewindespindel (40) in gleichem Drehsinn derart angetrieben werden, daß der Axialbewegung eine Drehbewegung der Gewindespindel (40) überlagert ist.

3.　Antrieb nach Anspruch 2, **dadurch gekennzeichnet, daß** die Überlagerung der Axial- und der Drehbewegung der Gewindespindel (40) in Abhängigkeit von zu handhabenden Gegenständen (48) erfolgt.

4.　Antrieb nach einem der Ansprüche 1 bis 3, **dadurch gekennzeichnet, daß** das Maschinenaggregat eine mit der Gewindespindel (40) gekoppelte Greifeinrichtung (56) ist.

5.　Antrieb nach Anspruch 4, **dadurch gekennzeichnet, daß** die Greifeinrichtung (56) drehfest auf einer Welle (44) sitzt, die drehfest mit der Gewindespindel (40) verbunden ist.

6.　Antrieb nach Anspruch 4 oder 5, **dadurch gekennzeichnet, daß** mit der Greifeinrichtung (56) Werkzeuge (48) handhabbar sind.

7.　Antrieb nach Anspruch 6, **dadurch gekennzeichnet, daß** die Werkzeuge (48) einen Kegel (52) haben.

**8.** Antrieb nach Anspruch 7,
**dadurch gekennzeichnet, daß** die Überlagerung der Axial- und der Drehbewegung der Gewindespindel (40) in Abhängigkeit vom Kegelwinkel der Kegel (52) der Werkzeuge (48) erfolgt.

**9.** Antrieb nach einem der Ansprüche 4 bis 8,
**dadurch gekennzeichnet, daß** die Greifeinrichtung (56) Teil eines Werkzeugwechslers ist.

**10.** Antrieb nach einem der Ansprüche 4 bis 9,
**dadurch gekennzeichnet, daß** die Greifeinrichtung (56) in eine Zwischenstellung einstellbar ist, in der die Greifer (46, 47) außerhalb der Werkzeugübernahmepositionen liegen.

**11.** Antrieb nach einem der Ansprüche 4 bis 10,
**dadurch gekennzeichnet, daß** die Greifeinrichtung (56) nach dem Ein oder Auswechseln des einen Werkzeuges (48) zum Ein- oder Auswechseln des anderen Werkzeuges (48) in Achsrichtung der Gewindespindel (40) verstellbar ist.

**12.** Antrieb nach einem der Ansprüche 1 bis 11,
**dadurch gekennzeichnet, daß** der Antriebsmotor (22) für die Gewindespindel (40) mit einem Ende (3, 4) der Gewindespindel antriebsverbunden ist.

**13.** Antrieb nach einem der Ansprüche 1 bis 12,
**dadurch gekennzeichnet, daß** der Antriebsmotor (22) für die Gewindespindel (40) direkt mit der Gewindespindel antriebsverbunden ist.

**14.** Antrieb nach einem der Ansprüche 1 bis 13,
**dadurch gekennzeichnet, daß** der Antriebsmotor (9) für die Mutter (5) über einen Riemenantrieb (11 bis 13) mit der Mutter (5) antriebsverbunden ist.

**15.** Antrieb nach einem der Ansprüche 1 bis 14,
**dadurch gekennzeichnet, daß** die Antriebsmotoren (9, 22) in einem Regelkreis auf eine gemeinsame Abtriebswelle als NC-Achse synchronisiert sind.

**16.** Antrieb nach einem der Ansprüche 1 bis 15,
**dadurch gekennzeichnet, daß** Antriebsmotoren (9, 22) unterschiedlicher Bauart und/oder Kennlinie eingesetzt werden.

**17.** Antrieb nach einem der Ansprüche 1 bis 16,
**dadurch gekennzeichnet, daß** die resultierende Geschwindigkeit der Maschinenaggregate (7, 56) durch Wahl der Parameter Drehrichtung und Drehgeschwindigkeit in additivem oder subtraktivem Sinne gesteuert wird.

**Claims**

**1.** Drive for machine units, such as carriages, gripping devices and the like with at least one threaded spindle (40), drivable via a drive motor (22), on which at least one nut (5) is located which may be driven in a rotating manner by means of a further drive motor (9),
**characterised in that** the drive motors (9, 22) are tuned via a control in relation to each other so that the motion of machine aggregate out of stationary is introduced first of all by the nut (5) for axial displacement of the threaded spindle (40) being driven rotatably and that subsequently also the threaded spindle (40) is driven in the same rotational direction and that after that the nut (5) and the threaded spindle (40) are turned so that the threaded spindle (40) stands axially firmly and turns merely round its axis.

**2.** Drive according to claim 1,
**characterised in that** the nut (5) and the threaded spindle (40) are driven in the same rotational direction in such a way that the axial movement is superimposed over a rotary motion of the threaded spindle (40).

**3.** Drive according to claim 2,
**characterised in that** the superimposition of the axial and the rotational movement of the threaded spindle (40) takes place depending on objects (48) to be handled.

**4.** Drive according to one of the claims 1 to 3,
**characterised in that** the machine aggregate is a gripper device (56) coupled with the threaded spindle (40).

**5.** Drive according to claim 4,
**characterised in that** the gripper device (56) is non-rotatably located on a shaft (44) which is non-rotatably connected with the threaded spindle (40).

**6.** Drive according to claim 4 or 5,
**characterised in that** with the gripper device (56) tools (48) can be handled.

**7.** Drive according to claim 6,
**characterised in that** the tools (48) have a cone (52).

**8.** Drive according to claim 7,
**characterised in that** the superimposition of the axial and rotational movement of the threaded spindle (40) occurs depending from the cone angle of the cones (52) of the tools (48).

**9.** Drive according to one of the claims 4 to 8,
**characterised in that** the gripper device (56) is part of a tool changer.

**10.** Drive according to one of the claims 4 to 9, **characterised in that** the gripper device (56) is adjustable in an intermediate position in which the grippers (46, 47) are located outside the tool takeover positions.

**11.** Drive according to one of the claims 4 to 10, **characterised in that** the gripper device (56) is displaceable after the change-in or change-out of one tool (48) for change-in or change-out of the other tool (48) in the direction of the axis of the threaded spindle (40).

**12.** Drive according to one of the claims 1 to 11, **characterised in that** the drive motor (22) for the threaded spindle (40) is drive connected with one end (3, 4) of the threaded spindle.

**13.** Drive according to one of the claims 1 to 12, **characterised in that** the drive motor (22) for the threaded spindle (40) is drive connected directly with the threaded spindle.

**14.** Drive according to one of the claims 1 to 13, **characterised in that** the drive motor (9) for the nut (5) is drive connected via a belt drive (11 to 13) with the nut (5).

**15.** Drive according to one of the claims 1 to 14, **characterised in that** the drive motors (9, 22) are synchronized in a closed-loop control at a common output shaft as an NC-axis.

**16.** Drive according to one of the claims 1 to 15, **characterised in that** drive motors (9, 22) of different type and/or characteristic curve can be used.

**17.** Drive according to one of the claims 1 to 16, **characterised in that** the resulting speed of the machine aggregates (7, 56) is controlled in the additive or subtractive sense by the choice of the parameters direction of rotation and speed of rotation.

**Revendications**

**1.** Entraînement pour unités de machines, par exemple chariots, ensembles de serrage ou similaires avec au moins une broche filetée (40), qui peut être entraînée par un moteur de commande (22) et sur laquelle est placé au moins un écrou (5) lequel peut être entraîné rotativement à l'aide d'un moteur de commande (9) supplémentaire, **caractérisé en ce que** les moteurs de commande (9, 22) sont accordés l'un par rapport à l'autre par une commande de telle façon que le mouvement de l'unité de machine est déclenché à partir de l'arrêt du fait que tout d'abord l'écrou (5) pour déplacer axialement la broche filetée (40), est entraîné rotativement, et qu'ensuite aussi la broche filetée (40) est entraînée dans le même sens de rotation et que, après, l'écrou (5) et la broche filetée (40) sont tournés de telle façon l'un par rapport à l'autre que la broche filetée (40) est arrêtée axialement et tourne seulement sur son axe.

**2.** Entraînement selon revendication 1, **caractérisé en ce que** l'écrou (5) et la broche filetée (40) sont entraînés dans le même sens de rotation de telle manière que le mouvement axial est superposé à un mouvement rotatif de la broche filetée (40).

**3.** Entraînement selon revendication 2, **caractérisé en ce que** la superposition des mouvements axial et rotatif de la broche filetée (40) a lieu en dépendance d'objets (48) à manier.

**4.** Entraînement selon une des revendications 1 à 3, **caractérisé en ce que** l'unité de machine est un ensemble de serrage (56), couplé avec la broche filetée (40).

**5.** Entraînement selon revendication 4, **caractérisé en ce que** l'ensemble de serrage (56) est placé de façon résistante à la torsion à un arbre (44), lequel est relié de façon résistante à la torsion à la broche filetée (40).

**6.** Entraînement selon revendication 4 ou 5, **caractérisé en ce que** des outils (48) peuvent être maniés par l'ensemble de serrage (56).

**7.** Entraînement selon revendication 6, **caractérisé en ce que** les outils (48) ont un cône (52).

**8.** Entraînement selon revendication 7, **caractérisé en ce que** la superposition du mouvement axial et du mouvement rotatif de la broche filetée (40) a lieu en dépendance de l'angle de cône des cônes (52) des outils (48).

**9.** Entraînement selon une des revendications 4 à 8, **caractérisé en ce que** l'ensemble de serrage (56) est un élément d'un changeur d'outil.

**10.** Entraînement selon une des revendications 4 à 9, **caractérisé en ce que** l'ensemble de serrage (56) est ajustable à une position intermédiaire dans laquelle les preneurs (46, 47) sont placés hors des positions de transfert d'outil.

**11.** Entraînement selon une des revendications 4 à 10,

**caractérisé en ce que** l'ensemble de serrage (56) est déplaçable en direction de l'axe de la broche filetée (40) après le remplacement d'un certain outil (48) par introduction ou sortie pour le remplacement de l'autre outil (48) par introduction ou sortie.

12. Entraînement selon une des revendications 1 à 11, **caractérisé en ce que** le moteur de commande (22) pour la broche filetée (40) est connecté propulsivement avec une extrémité (3, 4) de la broche filetée (40).

13. Entraînement selon une des revendications 1 à 12, **caractérisé en ce que** le moteur de commande (22) pour la broche filetée (40) est connecté propulsivement en direct avec la broche filetée.

14. Entraînement selon une des revendications 1 à 13, **caractérisé en ce que** le moteur de commande (9) pour l'écrou (5) est connecté propulsivement par une transmission à courroie (11 à 13) avec l'écrou (5).

15. Entraînement selon une des revendications 1 à 14, **caractérisé en ce que** les moteurs de commande (9, 22) sont synchronisés dans un circuit régulateur pour un arbre de sortie commun comme un axe à commande numérique.

16. Entraînement selon une des revendications 1 à 15, **caractérisé en ce que** des moteurs de commande (9, 22) de modèle et/ou courbe caractéristique différents sont utilisés.

17. Entraînement selon une des revendications 1 à 16, **caractérisé en ce que** la vitesse résultante des unités de machines (7, 56) est commandée par sélection des paramètres de direction et de vitesse rotative en sens additif ou soustractif.

Fig. 1a

Fig. 1b

EP 1 013 373 B1

Fig. 2

Fig. 3

EP 1 013 373 B1

EP 1 013 373 B1

Fig. 5

Fig. 4

15

Fig. 6

Fig. 7

Fig. 8

Fig. 9

EP 1 013 373 B1

Fig. 10

Fig. 11

EP 1 013 373 B1

Fig. 12

EP 1 013 373 B1

Fig. 13

Fig. 14

Fig. 15